# EUROPÄISCHE PATENTSCHRIFT

(11) **EP 1 337 755 B1**
(45) Veröffentlichungstag und Bekanntmachung des Hinweises auf die Patenterteilung: **24.08.2005**
(21) Anmeldenummer: 01983474.6
(22) Anmeldetag: 08.09.2001
(51) Int. Cl.: F03D 7/02

(54) **WINDENERGIEANLAGE**
WIND ENERGY TURBINE
EOLIENNE

(30) Priorität: 14.11.2000 DE 10056424; 30.03.2001 DE 10116011
(43) Veröffentlichungstag der Anmeldung: 27.08.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/010388
(87) Internationale Veröffentlichungsnummer: WO 2002/040862

(56) Entgegenhaltungen:
- EP-A- 1 128 064
- DE-A- 19 720 025
- DE-U- 20 017 994
- DE-U- 29 722 109
- US-A- 5 584 655

## Beschreibung

Die vorliegende Erfindung betrifft eine Windenergieanlage mit einem Rotor mit wenigstens einem Rotorblatt und einer Verstelleinrichtung für das Rotorblatt.

Solche Windenergieanlagen sind im Stand der Technik seit langem bekannt und werden auch in der Fachliteratur beschrieben. So z.B. bei Erich Hau in "Windkraftanlagen", Springer-Verlag, 2. Auflage, 1996, Seiten 231 ff.

Aus US-A-5,584,655 ist eine Windenergieanlage mit den Merkmalen des Oberbegriffs des Anspruches 1 bekannt. Aus DE 197 20 025 ist eine Windenergieanlage mit einem Rotorblatt, welches einen Stellantrieb aufweist, bekannt. Aus DE 297 22 109 ist eine Windenergieanlage bekannt, bei welcher zwei elektromotorische Antriebe für die Pitchverstellung eines Rotorblattes vorgesehen sind, wobei diese Antriebe stets am gleichen Punkt des Rotorblattes einwirken. Aus EP 1 128 064 ist eine Windenergieanlage bekannt, bei welcher der Blattverstellantrieb von einem zusätzlichen Generator gespeist wird. Aus DE 200 17 994 ist wie aus DE 297 22 109 bekannt, dass zwei Antriebe für die Pitchverstellung eines Rotorblattes vorgesehen sind, diese wirken von der gleichen Welle auf das Rotorblatt zu dessen Verstellung ein.

Diese Verstelleinrichtung muss so ausgelegt sein, dass sie das Rotorblatt bzw. bei einer zentralen Rotorblattverstellung die Rotorblätter in einer akzeptablen Zeit in eine vorgebbare Position stellen kann. Dazu ist im Stand der Technik häufig ein Motor vorgesehen, der eine durch die Rotorblätter und deren Lasten vorgegebene Mindestleistung aufweisen muss.

Unabhängig von Betrachtungen zum Einsatz und zur Auslegung von Getrieben ist leicht prognostizierbar, dass mit steigender Anlagengröße auch die Rotorblätter größer werden und somit auch der zur Rotorblattverstellung verwendete Motor eine höhere Leistung bereitstellen muss. Diese höhere Leistung führt unvermeidlich zu größeren Abmessungen des Motors.

Aufgabe der vorliegenden Erfindung ist es daher, eine Windenergieanlage der eingangs genannten Art derart weiterzubilden, dass die genannten Nachteile im Stand der Technik vermieden werden.

Die Aufgabe wird erfindungsgemäß durch eine Windenergieanlage mit dem Merkmal nach Anspruch 1 gelöst. Vorteilhafte Weiterbildungen sind in den Unteransprüchen beschrieben.

Erfindungsgemäß wird vorgeschlagen, dass die Verstelleinrichtung zur Verstellung der Rotorblätter wenigstens zwei Antriebe aufweist, die ihre Kraft zum Verstellen des Rotorblattes an verschiedenen Stellen in die Blattwurzel des Rotorblattes einleiten. Dadurch kann die erforderliche Kraft zum Verstellen des Rotorblattes bzw. der Rotorblätter an mehreren Stellen gleichzeitig in die Blattwurzel eingeleitet werden. Entsprechend der Anzahl der Antriebe beaufschlagt daher jeder Antrieb die nachfolgenden Komponenten nur mit einem entsprechenden Bruchteil der erforderlichen Gesamtkraft. Dies erlaubt wiederum eine kleinere Auslegung dieser Komponenten.

Weiterhin ist es erfindungsgemäß möglich, verfügbare Antriebe zu verwenden, die jetzt schon in großen Stückzahlen zur Verfügung stehen und die auch im Dauerbetrieb bereits erprobt sind. Darüber hinaus sind Vorrichtungen und Verfahren für deren Handhabung bereits bekannt und erprobt.

In einer besonders bevorzugten Ausführungsform der Erfindung sind die Antriebe Elektromotoren, nämlich bevorzugt Gleichstrommotoren. Im Fall einer Störung können diese Elektromotoren mit einer vorhandenen Notstromversorgung, z. B. in Form einer Batterie, verbunden werden.

Es ist auch möglich, für die Elektromotoren Drehstrom-Asynchronmotoren zu verwenden. Zur Erzeugung eines Bremsmomentes werden dann diese Motoren nach der Abschaltung des während des Rotorblatt-Verstellvorganges fließenden Drehstromes mit einem Gleichstrom beaufschlagt, so dass in den Asynchronmotoren ein stehendes Magnetfeld erzeugt wird. Dadurch können die noch drehenden Motoren abgebremst werden und in den stillstehenden Motoren wird ein Bremsmoment beibehalten.

Zur weiteren Funktionsweise der Pitchregelung sei auch auf die deutsche Patentanmeldung 197 31 918.1 verwiesen. Soweit es auf die Ausführungen in der vorliegenden Erfindung ankommt, wird der Fachmann sich auch der dort beschriebenen Lösung bedienen können. Soweit erforderlich, ist der Inhalt der vorgenannten Anmeldung auch Inhalt der vorliegenden Anmeldung.

Weitere vorteilhafte Ausführungsformen der Erfindung sind in den Unteransprüchen beschrieben.

Im Folgenden wird eine Ausführungsform der Erfindung anhand der beigefügten Figuren beschrieben. Dabei zeigen:
- Fig. 1: eine vereinfachte Darstellung einer Rotorblattwurzel mit mehreren Antrieben, und
- Fig. 2: eine vereinfachte Darstellung einer erfindungsgemäßen Steuerung
- Fig. 3: eine vereinfachte Darstellung einer erfindungsgemäßen Steuerung mittels Gleichstrommotor.

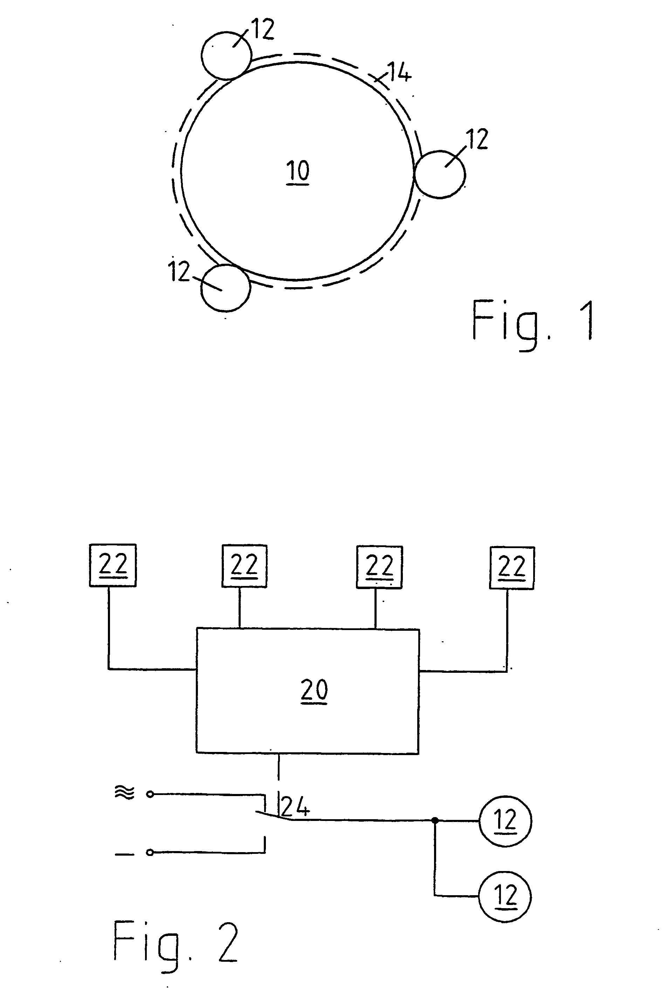

In Fig.1 ist stark vereinfacht eine Rotorblattwurzel 10 gezeigt, an deren Umfang drei Verstellantriebe 12 angeordnet sind. Die Rotorblattwurzel 10 selbst weist eine Außenverzahnung 14 an ihrem äußeren Umfang auf, die durch eine gestrichelte Linie dargestellt ist.

Die Verstellantriebe 12 sind in gleichförmigem Abstand am Umfang der Rotorblattwurzel 10 angeordnet. Die Verstellantriebe greifen über eine Verzahnung bevorzugt an einer Kugeldrehverbindung, die als Drehlager für das Rotorblatt eingebaut ist, an und verstellen hierüber das Rotorblatt. Theoretisch wäre es zwar grundsätzlich denkbar, dass die Verstellantriebe auch direkt am Rotorblatt angreifen, dies ist jedoch unter Umständen ungünstig, da die Rotorblattwurzel - wie auch der Rest des Rötorblattes - aus glasfaserverstärktem Kunststoff (GFK) oder ähnlichem besteht und ein Angriff der Verstellantriebe direkt im Motorblatt zur Zerstörung des Rotorblattes führen könnte. Durch einen gleichzeitigen Betrieb aller drei Antriebe 12 muss jeder Antrieb 12 nur noch ein Drittel der erforderlichen Gesamtleistung aufbringen, die zum Verstellen des Rotorblattes 10 erforderlich ist.

Weiterhin beaufschlagt dadurch, dass jeder der Verstellantriebe nur noch einen Teil, im konkreten Beispiel nur noch ein Drittel, der erforderlichen Gesamtkraft aufbringen muss, kann auch dessen Dimerisionierung kleiner ausfallen, als bei einem Einsatz nur eines einzigen Verstellantriebes 12.

Im Falle eines Schadens an einem der Verstellantriebe 12 kann dieser bei geeigneter Dimensionierung immer noch manuell gehandhabt werden und z.B. unter Einsatz eines Flaschenzuges innerhalb des Turmes der Windenergieanlage ausgetauscht werden.

In Fig. 2 ist eine Steuerungsvorrichtung dargestellt. Diese Steuerungsvorrichtung weist eine zentrale Steuerungseinheit 20 und mehrere Komponenten 22 auf, die als Messwertaufnehmer und/oder Sollwertgeber und/oder Eingabemittel ausgebildet sein können. Über diese Komponenten 22 werden der Steuerungseinheit 20 Informationen zur Verfügung gestellt, aus welchen diese zur Ansteuerung der Verstellantriebe 12 erforderliche Steuerungsdaten ableitet.

Diese Steuerungsdaten können beispielsweise eine Schaltvorrichtung 24 beeinflussen, welche die als Drehstrom-Asynchronmotoren ausgebildeten Verstellantriebe 12 entweder mit einem Drehstrom zum Verstellen der Rotorblattes 10 oder mit einem Gleichstrom zum Erzeugen eines Bremsmomentes in den Verstellantrieben 12 beaufschlagt.

Dadurch können die Verstellantriebe bei spontanen Lastwechseln an den Rotorblättern, z.B. bei böigen Winden, die sprunghaft und kurzzeitig ihre Richtung ändem, so dass eine sinnvolle Rotorblattverstellung nicht möglich ist, eine Bremswirkung ausüben.

Die drei Verstellantriebe 12 sind so ausgelegt, dass auch die weitere Verstellfunktion der Rotorblätter aufrechterhalten werden kann, wenn einer der drei Verstellantriebe ausfällt. Die gesamte Windenergieanlage muss also nicht abgestellt werden, wenn ein Verstellantrieb - aus welchen Gründen auch immer - einmal ausfallen sollte, weil dann die jeweils notwendige Pitchregulierung noch durch die zwei verbliebenen Verstellantriebe aufrechterhalten werden kann.

Fällt einer der Verstellantriebe aus, sind zwar die Lasten, die dann auf den zwei verbleibenden Verstellantrieben liegen, größer als zuvor, allerdings ist jeder Verstellantrieb so ausgelegt, dass er auch für längere Zeit im Überlastbetrieb gefahren werden kann. Insofern ist also jeder einzelne Verstellantrieb etwas überdimensioniert, um für den Fall, dass einer der Verstellantriebe ausfällt, noch für eine gewisse Zeit im Überlastbetrieb gefahren werden kann, zumindestens so lange, um einen sicheren Stopp der Windenergieanlage einzuleiten bzw. die Rotorblätter in Fahnenstellung zu bringen.

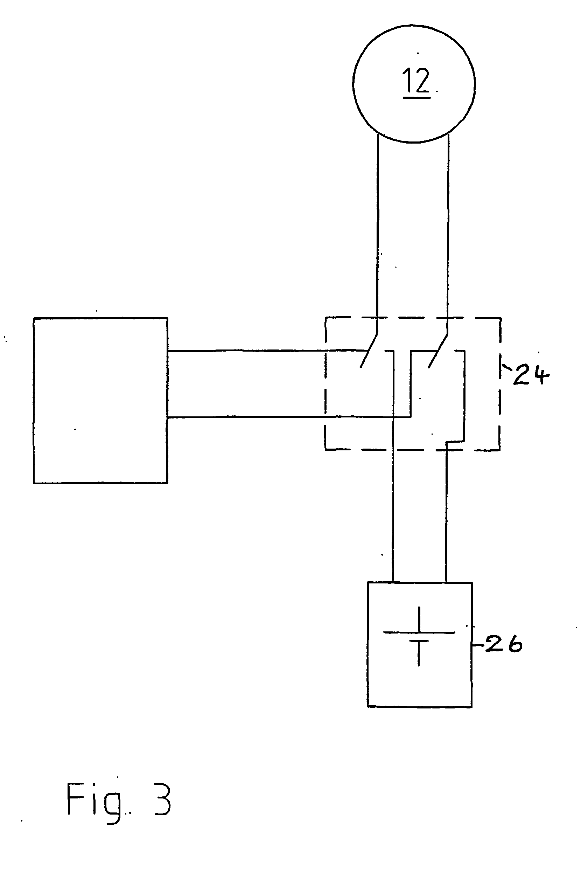

Fig. 3 zeigt beispielhaft einen der Antriebe 12, der über einen Schütz 24 mit der normalen Betriebsspannung verbunden ist. Dabei ist der Schütz 24 in Arbeitsposition.

Kommt es nun zu einem Stromausfall, wird auch der Schütz 24 abfallen und die Kontakte des Schützes werden umschalten und in ihrer Ruhelage den Verstellantrieb 12 mit der Batterie 26 verbinden, so dass in einem solchen Fall eine Verstellung des Rotorblattes in die Fahnenstellung und damit ein Anhalten der Anlage sicher möglich ist. Eine Tiefentladung der Batterie wird dabei (missbilligend) in Kauf genommen und ist einem unbestimmten Zustand der Anlage einer unklaren Pitch-Einstellung der Rotorblätter vorzuziehen.

## Patentansprüche

1. Windenergieanlage mit einem Rotor mit wenigstens einem eine Längsachse aufweisenden Rotorblatt und einer Verstelleinrichtung zur Einstellung des Pitchwinkels des Rotorblattes, wobei der innere Bereich des Rotorblattes eine Rotorblattwurzel (10) bildet, die zur Pitchwinkelverstellung um die Längsachse des Rotorblattes drehbar ist und wobei die Verstelleinrichtung wenigstens zwei Antriebe aufweist,
**dadurch gekennzeichnet, dass** die Antriebe (12) derart angeordnet sind, dass durch sie jeweils ein Drehmoment um die Längsachse des Rotorblattes an verschiednen Stellen der Rotorblattwurzel (10) in das Rotorblatt eingeleitet werden kann.

2. Windenergieanlage nach Anspruch 1,
**dadurch gekennzeichnet, dass** wenigstens einer der Antriebe (12) ein Elektromotor ist.

3. Windenergieanlage nach Anspruch 2,
**dadurch gekennzeichnet, dass** der Elektromotor ein elektrischer Gleichstrommotor ist.

4. Windenergieanlage nach Anspruch 2,
**dadurch gekennzeichnet, dass** der Elektromotor ein Drehstrom-Asynchronmotor ist und dass der Drehstrom-Asynchronmotor zeitweise mit Gleichstrom beaufschlagt ist.

5. Windenergieanlage nach einem der vorstehenden Ansprüche,
**dadurch gekennzeichnet, dass** die Antriebe (12) der Verstelleinrichtung miteinander gekoppelt sind.

6. Windenergieanlage nach einem der Ansprüche 4 oder 5,
**dadurch gekennzeichnet, dass** die Drehstrom-Asynchronmotoren durch einen Transformator elektrisch miteinander gekoppelt sind.

7. Windenergieanlage nach einem der vorstehenden Ansprüche, **gekennzeichnet durch** Messmittel (22) zur Ermittlung momentaner Beanspruchung wenigstens eines Teiles der Windenergieanlage und **durch** Steuerungsmittel (20), welche die für eine momentane Beanspruchung gewünschte Stellung wenigstens eines Rotorblattes ermitteln und mittels der Verstelleinrichtung entsprechend verstellen.

8. Windenergieanlage nach einem der vorstehenden Ansprüche, mit wenigstens zwei Rotorblättern,
**dadurch gekennzeichnet, dass** mindestens ein Rotorblatt asynchron zu dem oder den anderen verstellbar ist.

9. Windenerieanlage nach einem der vorstehenden Ansprüche,
**dadurch gekennzeichnet, dass** mindestens ein Teilabschnitt wenigstens eines Rotorblattes asynchron zu mindestens einem weiteren verstellbaren Teilabschnitt desselben Rotorblattes oder zu dem oder den anderen Rotorblättern oder deren Teilabschnitt verstellbar ist.

10. Windenergieanlage nach einem der vorstehenden Ansprüche,
**dadurch gekennzeichnet, dass** sich die für eine bestimmte momentane Beanspruchung gewünschte Stellung des oder der Rotorblätter über mit den Steuerungsmitteln (20) verbundene Eingabemittel vorgeben lässt.

11. Windenergieanlage nach einem der vorstehenden Ansprüche,
**dadurch gekennzeichnet, dass** die Verstellvorrichtung zur Verstellung des Rotorblattes einen Verstellmotor (12) und ein von diesem angetriebenes Verstellgetriebe aufweist, wobei die Steuerungsmittel (20) einen Istwert über die momentane Stellung des Rotorblattes erhalten und über die Verstelleinrichtung das Rotorblatt verstellen.

12. Windenergieanlage nach einem der vorstehenden Ansprüche,
**dadurch gekennzeichnet, dass** die Steuerungsmittel (20) die Verstellung des Rotorblattes verzögerungsfrei mit der Erfassung der Messwerte vornehmen.

## Claims

1. A wind energy turbine with a rotor having at least one longitudinal-axis-exhibiting rotor blade and an adjusting device for setting the pitch angle of the rotor blade, wherein the inner region of the rotor blade forms a rotor-blade root (10) which is rotatable about the longitudinal axis of the rotor blade for the purpose of adjusting the pitch angle, and wherein the adjusting device has at least two drives,
**characterised in that** the drives (12) are arranged in such a way that, through them, at various points on the rotor blade root (10), a torque about the longitudinal axis of the rotor blade can in each case be introduced into the rotor blade.

2. A wind energy turbine according to Claim 1
**characterised in that** at least one of the drives (12) is an electromotor.

3. A wind energy turbine according to Claim 2,
**characterised in that** the electromotor is an electric direct-current motor.

4. A wind energy turbine according to Claim 2,
**characterised in that** the electromotor is a three-phase asynchronous motor and **in that** the three-phase asynchronous motor is periodically impinged upon with direct current.

5. A wind energy turbine according to any one of the preceding claims,
**characterised in that** the drives (12) of the adjusting device are connected to one another.

6. A wind energy turbine according to either Claim 4 or Claim 5,
**characterised in that** the three-phase asynchronous motors are electrically connected via a transformer.

7. A wind energy plant according to any one of the preceding claims,
**characterised by** measuring means (22) for determining the instantaneous load on at least part of the wind energy turbine, and by control means (20) which determine the desirable position of at least one rotor blade for an instantaneous load and adjust this position accordingly.

8. A wind energy turbine according to any one of the preceding claims, having at least two rotor blades,
**characterised in that** at least one rotor blade is asynchronously adjustable relative to the other(s).

9. A wind energy turbine according to any one of the preceding claims,
**characterised in that** at least one partial portion of at least one rotor blade is asynchronously adjustable relative to at least one further adjustable partial portion of the same rotor blade or to the other rotor blade(s) or to a partial portion thereof.

10. A wind energy turbine according to any one of the preceding claims,
**characterised in that** desirable position of the rotor blade(s) for a specific instantaneous load is pre-selectable via input means connected to the control means (20).

11. A wind energy turbine according to any one of the preceding claims,
**characterised in that**, for adjustment of the rotor blade, the adjusting device has a regulating motor (12) and an adjustable mechanism driven thereby, wherein the control means (20) receive an actual value of the instantaneous position of the rotor blade and adjust the rotor blade via the adjusting device.

12. A wind energy turbine according to any one of the preceding claims,
**characterised in that** the control means (20) carry out the adjustment of the rotor blade instantaneously by acquisition of the measured values.

## Revendications

1. Eolienne avec un rotor comportant au moins une pale présentant un axe longitudinal et un dispositif de réglage pour le réglage de l'angle d'attaque de la pale, sachant que la zone interne de la pale forme une racine (10) qui peut être tournée autour de l'axe longitudinal de la pale pour le réglage de l'angle d'attaque et sachant que le dispositif de réglage comprend au moins deux entraînements, **caractérisée en ce que** les entraînements (12) sont disposés de telle sorte que, par leur biais, un couple de rotation puisse être introduit dans la pale autour de l'axe longitudinal de la pale à différents emplacements de la racine (10).

2. Eolienne selon la revendication 1, **caractérisée en ce qu'**au moins l'un des entraînements (12) est un moteur électrique.

3. Eolienne selon la revendication 2, **caractérisée en ce que** le moteur électrique est un moteur électrique à courant continu.

4. Eolienne selon la revendication 2, **caractérisée en ce que** le moteur électrique est un moteur asynchrone triphasé et **en ce que** le moteur asynchrone triphasé est alimenté en courant continu de manière intermittente.

5. Eolienne selon l'une quelconque des revendications précédentes, **caractérisée en ce que** les entraînements (12) du dispositif de réglage sont couplés l'un à l'autre.

6. Eolienne selon la revendication 4 ou 5, **caractérisée en ce que** les moteurs asynchrones triphasés sont électriquement couplés l'un à l'autre par le biais d'un transformateur.

7. Eolienne selon l'une quelconque des revendications précédentes, **caractérisée par** des moyens de mesure (22) pour la détermination de la sollicitation momentanée d'au moins une partie de l'éolienne et par des moyens de commande (20) lesquels déterminent la position, requise pour une sollicitation momentanée, d'au moins une pale et l'ajustent adéquatement au moyen du dispositif de réglage.

8. Eolienne selon l'une quelconque des revendications précédentes, comportant au moins deux pales, **caractérisée en ce qu'**au moins une pale est réglable de manière asynchrone par rapport à l'autre ou aux autres.

9. Eolienne selon l'une quelconque des revendications précédentes, **caractérisée en ce qu'**au moins une section d'au moins une pale est réglable de manière asynchrone par rapport à au moins une autre section réglable de cette même pale ou par rapport à l'autre pale ou aux autres pales ou à leur section.

10. Eolienne selon l'une quelconque des revendications précédentes, **caractérisée en ce que** la position, requise pour une certaine sollicitation momentanée, de la pale ou des pales peut être spécifiée par le biais de moyens d'entrée reliés aux moyens de commande (20).

11. Eolienne selon l'une quelconque des revendications précédentes, **caractérisée en ce que** le dispositif de réglage pour le réglage de la pale comporte un servomoteur (12) et un engrenage d'ajustage entraîné par celui-ci, sachant que les moyens de commande (20) obtiennent une valeur réelle par le biais de la position momentanée de la pale et ajustent la pale par le biais du dispositif de réglage.

12. Eolienne selon l'une quelconque des revendications précédentes, **caractérisée en ce que** les moyens de commande (20) réalisent le réglage de la pale sans retard avec la saisie des valeurs de mesure.
